# EUROPEAN PATENT APPLICATION

(11) **EP 1 653 337 A2**
(43) Date of publication of application: **03.05.2006**
(21) Application number: 05018296.3
(22) Date of filing: 23.08.2005
(51) Int. Cl.: G06F 3/02

(54) **Key and keyboard with efficiency of depth and scattered light**

(30) Priority: 20.09.2004 CN 200410082508
(71) Applicant: ASUSTeK Computer Inc., Peitou, Taipei City (TW)
(72) Inventor: Hsiao, Ming Kai, Peitou Taipei (TW); Yeh, Chih-Shan, Peitou Taipei (TW); Hsiao, Sheng-Yuan, Peitou Taipei (TW); Jiang, Jyi-Shiang, Peitou Taipei (TW); Lin, Chia-Ju, Peitou Taipei (TW)
(74) Representative: TER MEER - STEINMEISTER & PARTNER GbR

(57) **Abstract**

A key with efficiency of depth and scattered light has a key body and a light-shading layer. The key body has a key surface and a key back surface opposite to the key surface, and a pattern is formed on the key surface. The light-shading layer is partially light transmissible and covers over the key back surface. The light-shading layer has a first transparent pattern area, which is located corresponding to the pattern. The area of first transparent pattern area is greater than or equal to that of the pattern.

## Description

### BACKGROUND OF THE INVENTION

### Field of Invention

The invention relates to a key and a keyboard and, in particular, to a key and a keyboard with efficiency of depth and scattered light.

### Related Art

Due to the progress of electronic technology, people can operate all kinds of electronic devices with keyboards, such as computers, cell phones, telephones, and etc. In order to satisfy the desires of modern consumers, modem technologies not only need to provide keyboard users with much more convenient, but also need to make keyboards look better or special.

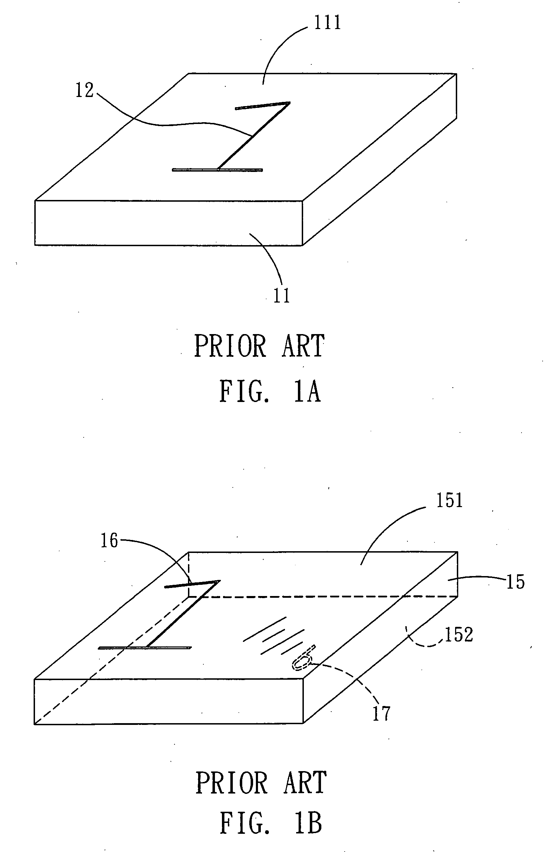

Please refer to the conventional key shown in FIG. 1A. In general, a letter or pattern 12 is formed on the key surface 111 of a nontransparent key 11 by printing, so that the user may understand the key's function.

Recently, a new key has been developed. As shown in FIG. 1B, a first pattern 16 is formed on a top surface 151 of a transparent key 15, and a second pattern 17 is formed on the bottom surface 152 opposite to the top surface 151. Because the depths of the first and second patterns 16 and 17 are different, a special effect is thus created.

However, variety and beautiful are what consumers always demand. It is therefore an important subject to add some thoughtful changes on a key or a keyboard to make it more appealing or having more special effect.

### SUMMARY OF THE INVENTION

In view of the foregoing, the invention is to provide a key and a keyboard with efficiency of depth and scattered light.

To achieve the above, a key with efficiency of depth and scattered light of the invention comprises a key body and a light-shading layer. The key body has a key surface and a key back surface opposite to the key surface, and a pattern is formed on the key surface. The light-shading layer is partially light transmissible and covers the key back surface. The light-shading layer has a first transparent pattern area, which is located corresponding to the pattern. The area of the first transparent pattern area is greater than or equal to the area of the pattern.

In addition, the invention discloses is a method for manufacturing a key with efficiency of depth and scattered light, which comprises the following steps: forming a pattern on a key surface of a key body, forming a light-shading layer on a key back surface of the key body opposite to the key surface, and forming a first transparent pattern area located corresponding to the pattern.

Furthermore, the invention also provides a keyboard with efficiency of depth and scattered light, which comprises a keyboard holder, a plurality of keys and a touch-control layer. The keyboard holder has a first surface, a second surface opposite to the first surface, and a plurality of holes. The keys are set on the first surface of the keyboard holder, and each key has a key body and a light-shading layer. The key body has a key surface and a key back surface opposite to the key surface on which a pattern is formed. The light-shading layer covers the key back surface and is partially light transmissible. The light-shading layer includes a first transparent pattern area, which is located corresponding to the pattern. The area of the first transparent pattern area is greater than or equal to the area of the pattern. The touch-control layer is disposed on the second surface of the keyboard holder and connects to the keys through the holes.

As above mention, the key with efficiency of depth and scattered light according to the invention has a first transparent pattern area located corresponding to the pattern. The area of the light-transmitting area is greater than or equal to that of the pattern so as to create a visual effect of depth on the pattern. When the present invention is used in an electronic device provided with a light source, the pattern may have the efficiency of scattered light. As a result, the keyboard has a different effect than that of the other keyboards on the market.

### BRIEF DESCRIPTION OF THE DRAWINGS

The invention will become more fully understood from the detailed description given herein below illustration only, and thus is not limitative of the present invention, and wherein:

FIGS. 1A and 1B are diagrams showing the conventional key;

FIG. 2 is a diagram showing a key with efficiency of depth and scattered light according to a preferred embodiment of the invention;

FIGS. 3A and 3B are other diagrams showing the key with efficiency of depth and scattered light according to a preferred embodiment of the invention;

FIG. 4 is a flow chart showing a method for manufacturing a key with efficiency of depth and scattered light according to a preferred embodiment of the invention;

FIG 5 is a diagram showing a keyboard with efficiency of depth and scattered light according to a preferred embodiment of the invention; and

FIG. 6 is a diagram showing a keyboard with efficiency of depth and scattered light according to another preferred embodiment of the invention, wherein the keyboard has a shield layer with a variant shielding effect.

### DETAILED DESCRIPTION OF THE INVENTION

The present invention will be apparent from the following detailed description, which proceeds with reference to the accompanying drawings, wherein the same references relate to the same elements.

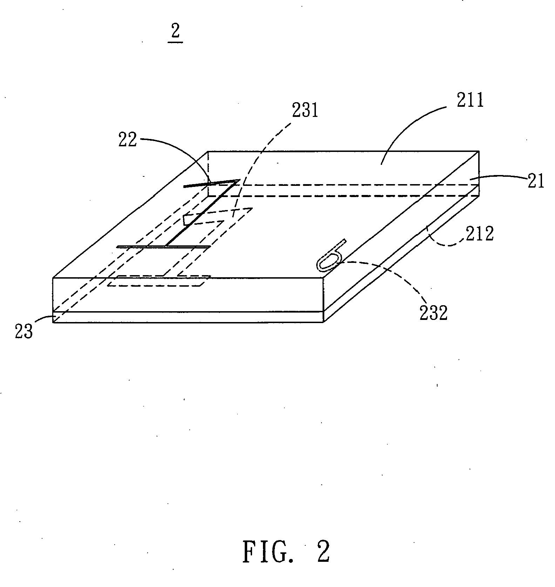

As shown in FIG. 2, a key 2 with efficiency of depth and scattered light according to the preferred embodiment of the invention comprises a key body 21 and a light-shading layer 23.

The key body 21 comprises a key surface 211 and a key back surface 212 opposite to the key surface 211. A pattern 22 is formed on the key surface 211. In this embodiment, the key body 21 is a transparent key body or a semi-transparent key body. In other words, the material of the key body 21 is chosen on demand without limitation in this embodiment. Furthermore, the pattern 22 can be a letter or a graph.

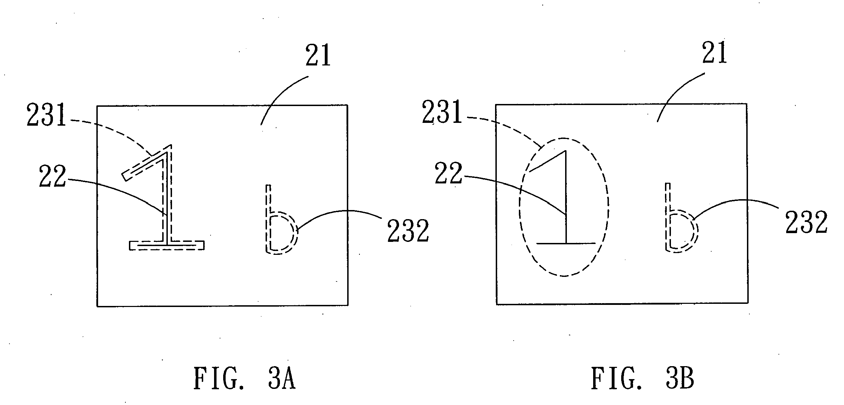

One of the features of the present invention is to create the efficiency of depth and scatter light by using the key 2 and by providing a light source at the back of the key body 21. Therefore, the key back surface 212 of the key body 21 is covered by a light-shading layer 23, which is made of a transparent or semi-transparent material. The transmission ratio of the key body 21 is not limited in the present embodiment, and the key body 21 can thus be penetrated by the light from the back thereof. The light-shading layer 23 has a first transparent pattern area 231, which is located corresponding to the pattern 22. In this embodiment, the first transparent pattern area 231 is formed on a projecting position of the pattern 22. The so-call projecting position is an area on the light-shading layer 23 covered the key back surface 212 corresponding to the pattern 22 on the key surface 211. The first transparent pattern area is formed on the projecting position and has the same pattern with the pattern 22. In the embodiment, the dimension of the first transparent pattern area is equal to or greater than that of the pattern 22. In this case, the first transparent pattern area 231 has the same graph as the pattern 22 (as shown in FIG 3A), but the area thereof is larger. In the preferred embodiment, the periphery of the first transparent pattern area 231 is greater than that of the pattern 22 in about 0.1~2mm. Alternatively, the area of the first transparent pattern area 231 may be a light-transmitting area greater than or equal to the area of the pattern 22 (as shown in FIG. 3B).

In this embodiment, a second transparent pattern area 232 is further formed on the light-shading layer 23, for presenting other patterns. In this case, the transmission ratio of the second transparent pattern area 232 is higher than or equal to that of the light-shading layer 23.

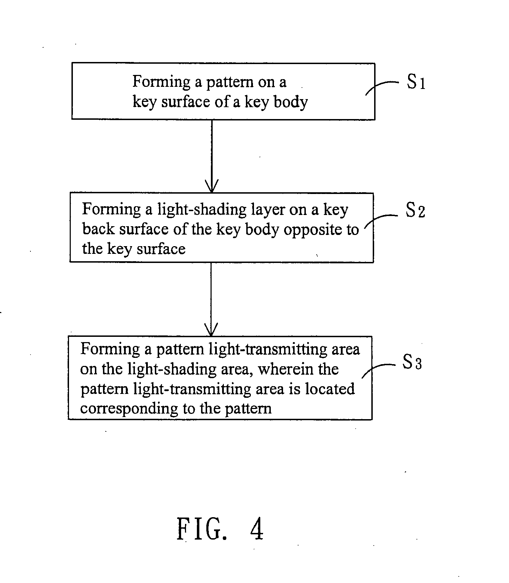

As shown in FIG. 4 in view of FIG. 2, a method for manufacturing a key with efficiency of depth and scattered light according to the preferred embodiment of the invention comprises the following steps S₁ to S₃.

First, Step S₁ is to form a pattern 22 on a key surface 211 of a key body 21. Herein, the pattern 22 is formed on the key body 211 by printing, gilding or laser carving.

Second, Step S₂ is to form a light-shading layer 23 on a key back surface 212 of the key body 21, which is opposite to the key surface 211. The light-shading layer 23 is formed on a key back surface 212 by printing or gilding. The light-shading layer 23 may be made of a transparent or semi-transparent material, and the transmission ratio of the light-shading layer 23 should not be limited in this embodiment.

Finally, Step S₃ is to form a first transparent pattern area 231 on the light-shading area 23. The first transparent pattern area 231 is located corresponding to the pattern 22. In this embodiment, the first transparent pattern area 231 is formed on a projecting position of the pattern 22. For example, the first transparent pattern area 231 can be formed by removing the light-shading layer 23 (the projecting position) corresponding to the pattern 22. In this embodiment, a part of the light-shading layer 23 located at the orthogonal projecting position of the pattern 22 is carved by using the technique of laser carving, so as to form the first transparent pattern area 231.

In addition, a second transparent pattern area 232 is further formed on the light-shading layer 23 by laser carving for presenting other patterns.

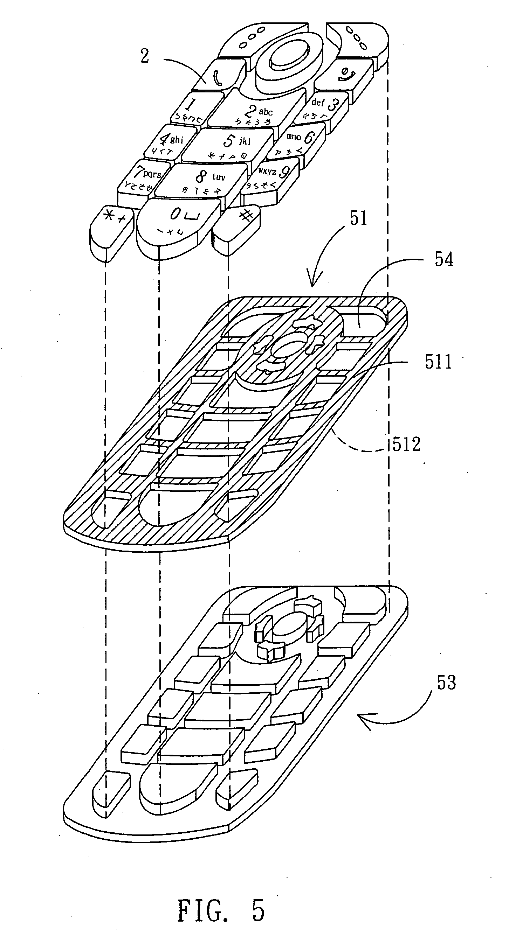

Take the keyboard of a cell phone as an example, as shown in FIG. 5, the keyboard 5 with efficiency of depth and scattered light according to the preferred embodiment of the invention comprises a keyboard holder 51, a plurality of keys 2 and a touch-control layer 53.

The keyboard holder 51 has a first surface 511, a second surface 512 opposite to the first surface 511, and a plurality of holes 54.

The keys 2 are disposed on the holes 54, which are on the first surface 511 of the keyboard holder 51. The structures of the keys 2 are the same as those of the keys 2 described in the previous embodiment, so the detailed descriptions are omitted for concise purpose.

The touch-control layer 53 is disposed on the second surface 512 of the keyboard holder 51, and connects to the keys 2 through the holes 54. A part of the touch-control layer 53 is connected with the keyboard holder 51, and the touch-control layer 53 is connected with other circuit elements (not shown). A signal instruction is transmitted to the circuit elements via the touch-control layer 53 when pressing the keys 2.

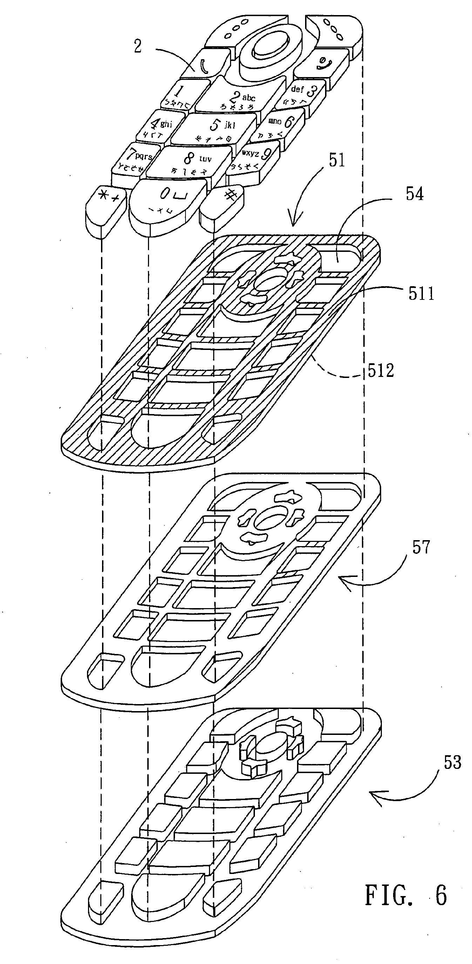

In this embodiment, the key 5 with efficiency of depth and scattered light may further include a shield layer 57 (as shown in FIG. 6), which is disposed between the keyboard holder 51 and the touch-control panel 53. All the electrical devices on the market, such as cell phones, have a light-emitting function. The shield layer 57 is used to properly shield the light to produce a variety of effects.

In summary, the efficiency of depth is produced in this invention by making the area of the first transparent pattern area of the key body greater than that of the pattern. Also, because transmission ratio of the first transparent pattern area is higher, when the light is emitted to the key surface from the key back surface of the key, an efficiency of scattered light is produced on the key surface of the key.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A key with efficiency of depth and scattered light, comprising:
a key body having a key surface and a key back surface opposite to the key surface, wherein a pattern is formed on the key surface; and
a light-shading layer covering the key back surface, wherein the light-shading layer is partially transparent and has a first transparent pattern area located corresponding to the pattern, and the area of the first transparent pattern area is greater than or equal to the area of the pattern.

2. The key according to claim 1, wherein the key body is transparent.

3. The key according to claim 1, wherein the pattern is a letter or a drawing.

4. The key according to claim 1, wherein the light-shading layer further comprises a second transparent area.

5. A method for manufacturing a key with efficiency of depth and scattered light, comprising:
forming a pattern on a key surface of a key body;
forming a light-shading layer on a key back surface of the key body, wherein the key back surface is opposite to the key surface; and
forming a first transparent pattern area on the light-shading layer, wherein the first transparent pattern area is located corresponding to the pattern.

6. The method according to claim 5, wherein the pattern is formed by printing, gilding or laser carving.

7. The method according to claim 5, wherein the light-shading layer is formed by printing or gilding.

8. The method according to claim 5, wherein the first transparent pattern area is formed by laser carving.

9. The method according to claim 5, further comprising forming a second transparent pattern area in the light shading layer.

10. The method according to claim 9, wherein the second transparent pattern area is formed by laser carving.

11. A keyboard with efficiency of depth and scattered light, comprising:
a keyboard holder having a first surface, a second surface opposite to the first surface, and a plurality of holes;
a plurality of keys disposed on the first surface of the keyboard holder, wherein each of the keys comprises:
a key body having a key surface and a key back surface opposite to the key surface, wherein a pattern is formed on the key surface, and
a light-shading layer covering the key back surface, wherein the light-shading layer is partially transparent and has a first transparent pattern area located corresponding to the pattern, and the area of the first transparent pattern area is greater than or equal to the area of the pattern; and
a touch-control layer disposed on the second surface of the keyboard holder and connecting to the keys via the holes.

12. The keyboard according to claim 11, wherein the key body is transparent.

13. The keyboard according to claim 11, wherein the pattern is a letter or a drawing.

14. The keyboard according to claim 11, wherein the light-shading layer further comprises a second transparent pattern area.

15. The keyboard according to claim 14, wherein the transmission ratio of the second transparent pattern area is higher than or equal to the transmission ratio of the first transparent pattern area.

16. The keyboard according to claim 11, further comprising:
a shield layer disposed between the keyboard holder and the touch-control layer for shielding light.
